(19) Europäisches Patentamt
European Patent Office
Office européen des brevets

(11) **EP 2 458 510 B1**

(12) **EUROPEAN PATENT SPECIFICATION**

(45) Date of publication and mention
of the grant of the patent:
**07.05.2014 Bulletin 2014/19**

(51) Int Cl.:
**G06F 17/15** (2006.01)   **H04B 1/71** (2011.01)
**H04N 13/00** (2006.01)

(21) Application number: **10193008.9**

(22) Date of filing: **29.11.2010**

(54) **Method and apparatus for performing a cross-correlation**

Verfahren und Vorrichtung zur Durchführung einer Kreuzkorrelation

Procédé et appareil pour la réalisation d'une corrélation croisée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.05.2012 Bulletin 2012/22**

(73) Proprietor: **NTT DoCoMo, Inc.**
**Tokyo (JP)**

(72) Inventors:
• **Schweiger, Florian**
  **80801 München (DE)**
• **Eichhorn, Michael**
  **81673 München (DE)**
• **Schroth, Georg**
  **81243 München (DE)**
• **Steinbach, Eckehard**
  **82140 Olching (DE)**
• **Fahrmair, Michael**
  **81375 München (DE)**

(74) Representative: **Betten & Resch**
**Theatinerstrasse 8**
**80333 München (DE)**

(56) References cited:
**EP-A1- 2 326 091    US-A1- 2010 027 602**

• **Zhong-Dan Lan ET AL: "Robust matching by partial correlation", , 1 August 1995 (1995-08-01), pages 1-21, XP55003595, INRIA, France Retrieved from the Internet: URL:http:// citeseerx.ist.psu.edu/viewdoc/d ownload? doi=10.1.1.34.2835&rep=rep1&type=p df [retrieved on 2011-07-26]**

• **PEIHUA LI ET AL: "Robust Acoustic Source Localization with TDOA Based RANSAC Algorithm", 16 September 2009 (2009-09-16), EMERGING INTELLIGENT COMPUTING TECHNOLOGY AND APPLICATIONS, SPRINGER BERLIN HEIDELBERG, BERLIN, HEIDELBERG, PAGE(S) 222 - 227, XP019140629, ISBN: 978-3-642-04069-6 * abstract * * sections 2.1 and 2.3 ***

• **CALWAY A ET AL: "Motion estimation using adaptive correlation and local directional smoothing", IMAGE PROCESSING, 1998. ICIP 98. PROCEEDINGS. 1998 INTERNATIONAL CONFERENCE ON CHICAGO, IL, USA 4-7 OCT. 1998, LOS ALAMITOS, CA, USA,IEEE COMPUT. SOC, US, vol. 3, 4 October 1998 (1998-10-04), pages 614-618, XP010586808, DOI: 10.1109/ICIP. 1998.727338 ISBN: 978-0-8186-8821-8**

• **Zhong-Dan Lan ET AL: "Robust Location based Partial Correlation", , 5 June 1997 (1997-06-05), XP55003916, INRIA, France Retrieved from the Internet: URL:http://hal.inria.fr/docs/ 00/07/35/03/P DF/RR-3186.pdf [retrieved on 2011-07-29]**

• **FLORIAN SCHWEIGER ET AL: "Consensus-based Cross-correlation", PROCEEDINGS OF THE 19TH ACM INTERNATIONAL CONFERENCE ON MULTIMEDIA, MM '11, 28 November 2011 (2011-11-28), pages 1289-1292, XP055078301, New York, New York, USA DOI: 10.1145/2072298.2071996 ISBN: 978-1-45-030616-4**

- LIHUA GUO ED - ANONYMOUS: "Permutation-Based Distributed Video Coding", IMAGE AND SIGNAL PROCESSING, 2008. CISP '08. CONGRESS ON, IEEE, PISCATAWAY, NJ, USA, 27 May 2008 (2008-05-27), pages 85-89, XP031286665, ISBN: 978-0-7695-3119-9
- SIMON J GODSILL ET AL: "Statistical Reconstruction and Analysis of Autoregressive Signals in Impulsive Noise Using the Gibbs Sampler", IEEE TRANSACTIONS ON SPEECH AND AUDIO PROCESSING, IEEE SERVICE CENTER, NEW YORK, NY, US, vol. 6, no. 4, 1 July 1998 (1998-07-01), XP011054313, ISSN: 1063-6676
- KIN KEUNG LAI ET AL: "The Application of Wavelet Transform in Stock Market", KSS'2007, 5 November 2007 (2007-11-05), pages 1-8, XP055078310, [Ishikawa High-Tech Conference Center, Nomi, Ishikawa, JAPAN

- TURIN G: "An introduction to matched filters", IRE TRANSACTIONS ON INFORMATION THEORY, IEEE, USA, vol. 1, no. 3, 1 June 1960 (1960-06-01), pages 311-329, XP011217141, ISSN: 0096-1000
- SCHROTH G ET AL: "Video synchronization using bit rate profiles", INTERNATIONAL CONF. ON IMAGE PROCESSING (ICIP 2010), USA, 26 September 2010 (2010-09-26), pages 1549-1552, XP031814798, ISBN: 978-1-4244-7992-4

**Description**

**FIELD OF INVENTION**

The present invention relates to a method and an apparatus for performing a cross-calculation between a first and a second signal.

**BACKGROUND OF THE INVENTION**

Cross-correlation is a standard tool in signal processing with numerous applications ranging from telecommunication to image processing.

Its basic purpose is to retrieve the fundamental similarity between two signals which is otherwise obscured by adverse effects such as noise, partial occlusion etc.

The cross-correlation function of two one-dimensional, discrete-time and real-valued signals is defined as

$$c(\Delta t) = (a \star b)(\Delta t) = \sum_{t \in T} a(t + \Delta t)\, b(t) \qquad (1)$$

where T is the set of sample indices where both a(t + $\Delta$t) and b(t) are unequal to zero.

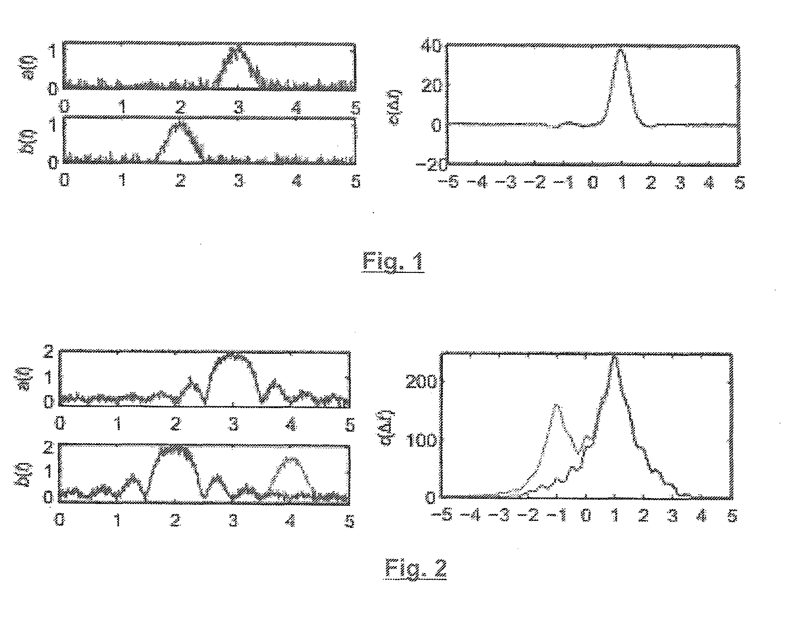

For every offset Ot, the cross-correlation function measures the similarity between the first signal and the second, accordingly shifted signal. If there is a statistical correlation between the two signals, the cross-correlation function will attain high values for the respective offsets. This is illustrated in Fig. 1 which shows in the left-hand part samples from signals a and b that are one unit apart and are obviously highly correlated. Neglecting noise components, the respective samples are even identical in this example. The corresponding cross-correlation function c shown in the right-hand part reflects this with a maximum at offset $\Delta t = 1$.

More precisely, if the random processes generating the samples of a and b are jointly ergodic and zero-mean, then c($\Delta$t) is an estimate for the covariance of the two processes shifted with respect to each other by $\Delta t$.

Cross-correlation plays an important role in various fields. Generally speaking, it is employed whenever a certain pattern needs to be detected in a signal or when the shift between two matching signals is to be determined.

In telecommunication for instance, cross-correlation is used to detect template signals of known shape in a noisy received signal. This is referred to as the concept of matched filters (see e.g. G. Turin. An introduction to matched filters. Information Theory, IRE Transactions on, 6(3):311-329, 1960). Another application is to determine the time-of-arrival difference of signals in order to measure, e.g., distances or velocities (see e.g. US Patent Application 2010/0027602 A1).

While cross-correlation is applied in a wide variety of fields, it is prone to failure if the signals are excessively corrupted. While it is relatively insusceptible to additive white noise, the effects of non- stationary disturbances are more severe. If the signals include, e.g., dominant crosstalk components, or if burst-wise errors spoil the measurements temporarily, the cross-correlation function can contain side maxima in the same order of magnitude as the peak at the true offset. In image processing applications, this can be caused for example by spatial occlusions. Fig. 2 illustrates this effect schematically. In this example, there is shown an example for a local disturbance of the signal b(t) at time point 4 (see left-hand part, lower graph), e.g. due to crosstalk. This can lead to a significant secondary peak in the cross-correlation function, as shown in the graph on the right-hand side of Fig. 2.

The plainest form of cross-correlation as defined in Equation (1) easily extends to more general cases. For the afore-mentioned image processing applications, e.g., two and higher dimensional signals need to be considered. Equation (2) gives the general n-dimensional version, which also accommodates complex valued input signals.

$$c(\Delta t) = \sum_{t_1} \cdots \sum_{t_N} a^*(t + \Delta t)\, b(t), \quad t, \Delta t \in \mathbb{Z}^N \qquad (2)$$

A special case of cross-correlation is auto-correlation where a signal is correlated with itself, i.e., a = b. Auto-correlation is, e.g., useful to identify periodic patterns in a signal.

Another variant commonly used in image processing is normalized cross correlation as defined in Equation 3.

$$\bar{c}(\Delta t) = \sum_{i \in \mathcal{T}} \frac{[a(t + \Delta t) - \bar{a}(\Delta t)]\,[b(t) - \bar{b}(\Delta t)]}{\sigma_a(\Delta t)\,\sigma_b(\Delta t)} \qquad (3)$$

Here, x⁻ and $\sigma_x$ denote the mean and standard deviation of signal x within the overlap region of a and b shifted by $\Delta t$. Normalized cross-correlation is equivalent to the correlation coefficient between the accordingly shifted signals. Its advantage is that it allows for a fair comparison of signals on different overall levels.

Yet another variation is rank correlation, which does not consider the actual values of the input signals but rather their ranked order. This increases robustness against isolated errors, which is comparable to the advantages of the median filter over regular averaging. Two widely used rank correlation methods are the so-called Spearman's p and Kendall's T (see e.g..G. Kendall and J.D. Gibbons. Rank correlation methods. 1990).

Zhong-Dan Lan ET AL: "Robust matching by partial correlation", 1 August 1995 (1995-08-01), pages 1-21, XP55003595, INRIA, France discloses a robust matching by partial correlation. There is presented a robust statistics tool to find "the good part" to be considered for applying correlation.

PEIHUA LI ET AL: "Robust Acoustic Source Localization with TDOA Based RANSAC Algorithm", 16 September 2009 (2009-09-16), MERGING INTELLIGENT COMPUTING TECHNOLOGY AND APPLICATIONS, SPRINGER BERLIN HEIDELBERG, BERLIN, HEIDELBERG, PAGE(S) 222 - 227, XP01 9140629, ISBN: 978-3-642-04069-6 discloses robust acoustic source localization with TDOA based RANSAC algorithm. There is presented a robust algorithm which combines the RANSAC algorithm and the generalized cross correlation based time difference of arrival (TDOA).

CALWAY A ET AL: "Motion estimation using adaptive correlation and local directional smoothing", IMAGE PROCESSING, 1998. ICIP 98. PROCEEDINGS. 1998 INTERNATIONAL CONFERENCE ON CHICAGO, IL, USA 4-7 OCT. 1998, LOS ALAMITOS, CA, USA,IEEE COMPUT. SOC, US, vol. 3, 4 October 1998 (1998-10-04), pages 614-618, XP01 0586808, DOI: 10.1109/ICIP.1998.727338 ISBN: 978-0-8186-8821-8 discloses motion esimation using adaptive correlation and local directional smoothing. There are presented two forms of correlation for addressing the problems presented by non-translational and multiple motions in region based motion estimation. The first-registered correlation AFFINE motion parameters to be estimated, whilst the second-iterated partial correlation enables the identification and estimation of two motion components within a region. Incorporation of both techniques in a multiresolution framework provides for more flexibility in a region selection in terms of size versus robustness.

Correlation", 5 June 1997 (1997-06-05), XP55003916, INRIA, France discloses an approach for robust location based partial correlation. A partial correlation technique is proposed to solve the problem that classical correlation methods fail near the disparity discontinuities which occur at the boundaries of objects.

SUMMARY OF THE INVENTION

The present invention is defined in the independent claims. The dependent claims define embodiments of the invention.

By identifying outliers among the partial cross-correlation functions based on performing a consensus-check, it is possible to obtain a better combined cross-correlation function free from distortions.

According to one embodiment the step of comparing comprises:

calculating based on said combined partial cross-correlation functions a combined cross-correlation result as a candidate offset, and wherein

if the consensus- check results in that there is no consensus, treating said partial cross-correlation function as an outlier.

According to one embodiment the method comprises the features defined in claim 4.

In this manner the embodiment identifies among the possible combinations of PCCFs those which has no outliers and thereby the best final combined cross-correlation function.

According to one embodiment the combined cross-correlation function is calculated based on a plurality of sets of segments which may have different numbers of segments, and wherein said final combined cross-correlation function is calculated based on the set of segments which has the maximum number of segments among the sets of segments for which no outlier has been found.

In this manner different samples which have different numbers of segments may be considered to find the optimum combination of segments for obtaining the final combined cross-correlation function.

According to one embodiment a combined cross-correlation function yields a candidate offset, and said outlier detection or removal approach comprises one of the following:

Comparing the absolute or the relative value of a partial cross-correlation function at the candidate offset with the combined cross-correlation value at the candidate offset;
comparing the curvature of the partial cross-correlation function at the candidate offset with a certain threshold;
comparing the distance in samples from the candidate offset to the closest significant local maximum of the partial cross-correlation function as to whether it is beyond a certain threshold.

These are specific ways of performing the consensus check for the individual cross-correlation functions.

According to one embodiment said outlier detection or removal approach comprises one of the following:

a RANSAC algorithm;
a least median of estimated squares algorithm;
an M-estimator.

These are examples for the outlier detection approach.

According to one embodiment said outlier detection approach is a RANSAC algorithm in which the model which is to be fitted is the peak of the cross-correlation value between the first and second signal, and the data points used in the fitting are the respective peaks of the partial cross correlation functions, the values of which, after removal of the disturbed partial cross-correlation functions, are combined to obtain the total cross correlation function.

This is a specific preferable embodiment of implementing a RANSAC algorithm.

According to one embodiment the method may be the method of claim 2 further comprising:

Treating the obtained on-dimensional signals as quasi stationary and
normalize them with their global means and standard deviations.

In this manner the signals may be prepared for the cross-correlation.

According to one embodiment there is provided a computer program comprising: Computer program code which when being executed on a computer enables said computer to carry out a method according to one of the embodiments of the invention.

## BRIEF DESCRIPTION OF THE DRAWINGS

Fig. 1 schematically illustrates the cross-correlation of two signals.
Fig. 2 schematically illustrates a local disturbance and its influence on a cross-correlation.
Fig. 3 schematically illustrates a RANSAC approach for fitting.
Fig. 4 schematically illustrates the partial cross correlation functions for the example videos shown in Fig. 5.
Fig. 5 schematically illustrates two videos used in an embodiment of the invention.
Fig. 6 schematically illustrates the conventional cross-correlation for the videos sown in Fig. 5.
Fig. 7 schematically illustrates the consensus-based cross-correlation for the videos sown in Fig. 5.

## DETAILED DESCRIPTION

First of all some terms will be defined.

PCCF - partial cross-correlation functions
RANSAC - Random Sample Consensus
M-Estimators - are a broad class of estimators, which are obtained as the minima of sums of functions of the data
LMedS - Least Median of Squares

According to one example there is provided a novel approach to make cross-correlation robust to sporadic disturbances like the ones discussed above. The approach is especially suitable for those cases where major parts of the signals are free from such errors, and only some, locally limited portions are corrupted. In such cases then the input data can hence be divided into good and bad segments, and one may use an established outlier removal strategy such as like for example the *ransac* algorithm to make this separation.

Random Sample Consensus *(ransac)* is an iterative algorithm to robustly fit a model to a set of measurements or data points (see e.g. M.A. Fischler and R.C. Bolles. Random sample consensus: A paradigm for model fitting with applications to image analysis and automated cartography. Communications of the ACM, 24(6):381-395, 1981). The fundamental difference to, e.g., least squares fitting is that initially just the minimum number of data points necessary to establish a model are used. These are selected randomly. At this stage, small errors in the measurements are not averaged out as efficiently. However, the main concern is to at first identify and eliminate grossly erroneous data points (referred to as outliers). This is achieved by testing all the measurements against the initially established model. Points that comply with the model are labeled inliers, the others deemed outliers. This process is repeated with a different set of randomly picked points, and reiterated as many times as necessary to be confident about having chosen an outlier-free set at least once. Eventually, the model with highest consensus, i.e., with the least outliers, is accepted, and a final least squares fit is performed based on its inliers.

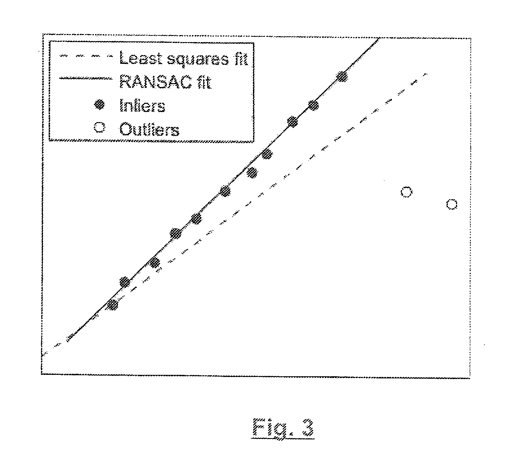

Fig. 3 compares the *ransac* strategy with standard least squares for the textbook example of 2D line fitting. In the example shown in Fig. 3 the majority of the given 2D points can be consistently modeled by a straight line. Two spurious points, however, spoil least square fitting. *Ransac,* on the other hand, can identify the two outliers and excludes them from consideration.

The proposed cross-correlation strategy can provided a versatile extension to achieve robustness to burst errors in the input signals.

In the following there will be described some more concrete examples of the approach. Already now it should be mentioned, however, that the concretely involved parameters such as the segment length, the number of combined PCCFs, and the outlier classification strategy can be adapted individually to the specific signal class.

This especially also applies to the outlier classification strategy. While the examples described in the following are mainly based on *ransac,* the basic concept may equally be based upon any other outlier removal strategy, such as M-Estimators or LMedS.

According to one example the method of performing a cross-calculation between two original signals which may be partly corrupted e.g. due to burst errors operates as follows

> a.) splitting one of the original signals into shorter segments of length M
> b.) cross-correlating each of them with the second signal to obtain partial cross-correlation functions (PCCF) and
> c.) (re-)combining PCCFs with a suitable outlier separation strategy in order to separate the corrupted segments from the valid ones.

According to one further example the method of performing a cross-calculation between two signals which may be partly corrupted e.g. due to burst errors operates as follows.

In a first step one of the original signals (the first signal) is splitted into shorter segments of length M (shorter than the original length L).

In a second step each of these shorter segments is cross-correlated with the second signal to obtain partial cross-correlation functions (PCCF).

In a third step the partial cross-correlation functions are combined to obtain a combined cross-correlation function.

Then, in a fourth step the partial cross-correlation functions are compared with the combined cross-correlation function to identify outliers by performing a consensus-check to check whether the PCCFs are in consensus with the combined cross-correlation function.

Then the PCCFs which have been identified as outliers are removed an the remaining PCCFs are re-combined to obtain a final combined cross-correlation function.

The step of performing a consensus-check in one example may comprise the step of applying an outlier detection or outlier removal approach to identify or remove those segments which are disturbed or corrupted. In this step different outlier detection approaches may be used, one of them being the RANSAC approach.

Then there may be performed the re-combining of the partial cross-correlation functions without the ones which are based on said segments which have been identified as disturbed or corrupted to obtain an less disturbed or less corrupted (final) cross-correlation result.

In one example the outlier detection approach is ransac, and the model to be fitted is the offset, hence a single scalar value which is the location of the peak of the cross-correlation function. The data points are the PCCFs, which are combined, i.e., summed up in order to determine potential candidate offsets. The sum of all PCCFs then yields the cross-correlation function of the original signals.

According to one embodiment the approach may be used to find the temporal offset between two video sequences of the same event but different perspective by:

> a.) reducing the video data to one-dimensional time series that reflect characteristic scene changes over time. For example, one may use for this purpose the bitrate of the video data as generated by an encoder, and as described for example in the European Patent application no. 09175917.5 or in G. Schroth et al. Video synchronization using bit rate profiles. Proceedings of 2010 IEEE 17th International Conference on Image Processing, 26.09.2010, to generate such time series.

b.) Applying the correlation mechanism as described in one of the examples of the described approach to detect the temporal offset between the two video sequences.

Optionally the method may further include to treat the derived 1-D signals as quasi-stationary and normalize them with their global means and standard deviations before performing the cross correlation.

In, the following some further examples will be described in somewhat more detail.

According to one example one may consider the basic idea behind the described cross-correlation approach is to split one of the original signals into shorter segments of length M (which is smaller than the original signal length L), and to cross-correlate each of them with the second signal. The so obtained partial cross-correlation functions (PCCF) are then combined in a manner similar to a *ransac*-approach in order to separate the corrupted segments from the valid ones. In terms of *ransac,* the model to be fitted is the offset, hence a single scalar value. The data points are the PCCFs, which are combined, i.e., summed up in order to determine potential candidate offsets. Indeed, the sum of all PCCFs $c_i$ yields the cross-correlation function of the original signals:

$$\sum_i c_i(\Delta t) = \sum_i \sum_{t \in T} a(t + \Delta t)\, b_i(t)$$
$$= \sum_{t \in T} a(t + \Delta t) \sum_i b_i(t)$$
$$= \sum_{t \in T} a(t + \Delta t)\, b(t)$$
$$= c(\Delta t)$$

By omitting outlier PCCFs in the above summation, it becomes possible to exclude their influence on the resulting cross-correlation function.

There is a trade-off in choosing the number of PCCFs to be combined in every *ransac* step. In principle, it is desirable to use as many PCCFs as possible in order to obtain a maximally conclusive peak in the resulting cross-correlation function. Raising their number, however, also increases the chance of including outlier PCCFs. This decision depends on the expected burst error distribution and is application specific.

A similar choice has to be made for the segment length M. Using too few samples increases the risk to cut out segments that are not discriminative enough. On the other hand, too long segments are prone to contain corrupted samples.

The algorithm below summarizes the proposed cross-correlation according to one example given two input signals a(t) and b(t).

1. Chop signal b(t) in segments bi(t) of length M
2. Compute the PCCFsci($\Delta$t) = (a * bi)($\Delta$t)
3. [repeat 3a/b/c until confidence is reached that one outlier-free PCCF set was selected]

  a. Make a random selection of s PCCFs and compute their sum
  b. Extract candidate offsets from that sum
  c. For every offset candidate, evaluate the number of inliers among the PCCFs

4. Select the offset with most inlierPCCFs
5. Re-compute the offset from the combination (sum) of inlierPCCFs

The particular way of implementing the step 3c is a matter of choice which can be chosen suitably by the skilled person. For example to determine the number of outliers and the number of inliers there may be checked whether the offsets of the PCCFs lie within a certain threshold of the combined offset value. The threshold may e.g. chosen as the standard deviation of the sample of PCCFs offset values, but other choices may be possible as well. The whole procedure of step 3 may be repeated until the selected set of PCCFs is such that it does not contain any outliers any more but instead - for a certain set of PCCFs - has only inliers.

Then, in step 4 there may be selected the set of PCCFs which has the largest number of inliers among those sets found in step 3 which only have inliers.

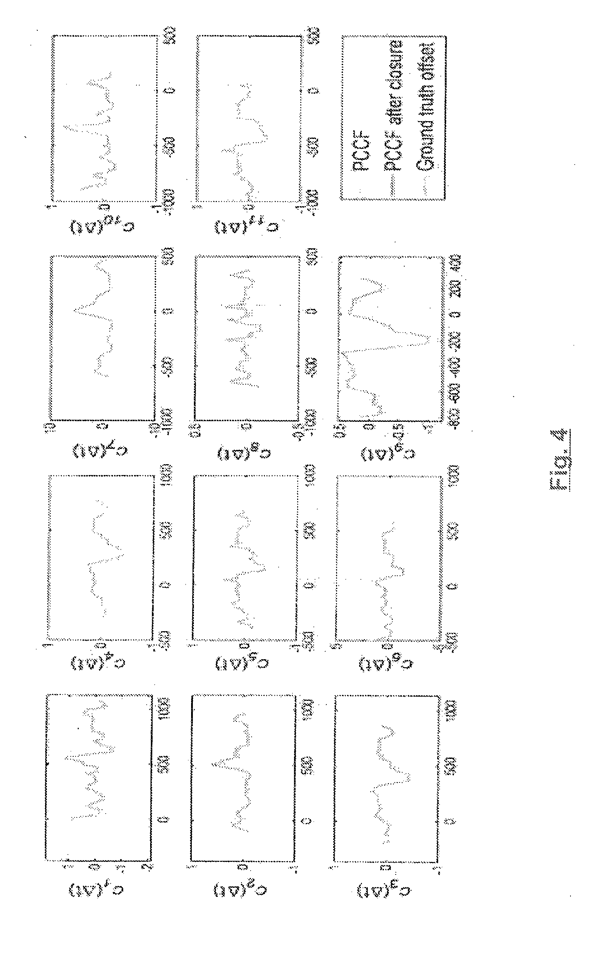

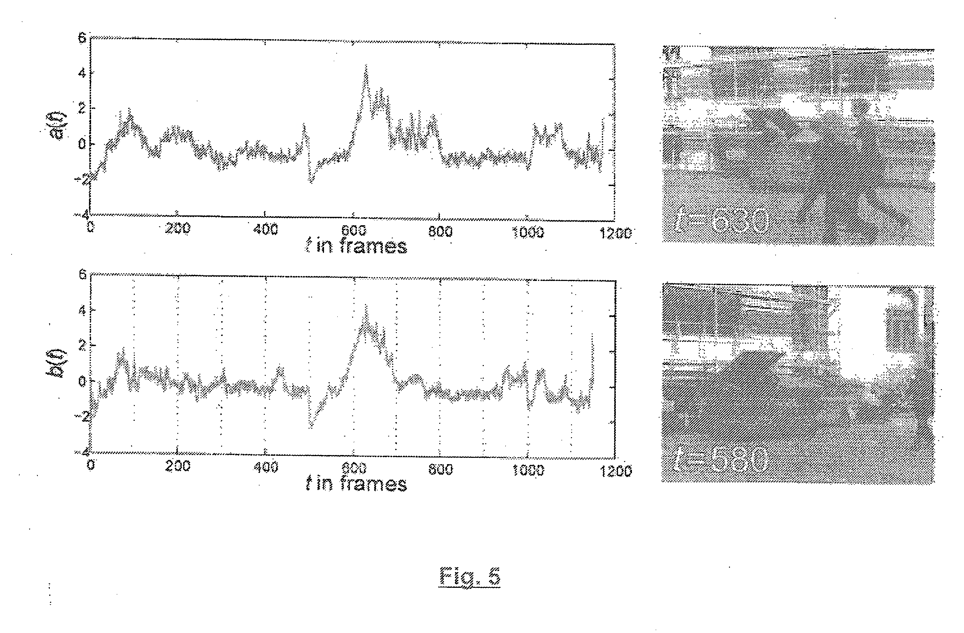

Depending on the application, the PCCFs and their combinations do not necessarily exhibit a single, conclusive peak. Instead, they may contain several local maxima of comparable strength, leading to more than one candidate offset. This effect is illustrated in Fig. 4 which shows partial cross correlations for the two video signals a(t) and b(t) shown in Fig. 5. Fig. 5 shows on the left-hand side two input signals a and b, and on the right-hand side it shows two synchronous frames of the video sequences of which the signals a(t) and b(t) have been derived from. One can see from the frames that obviously the video sequences are taken from different angles. The segmentation of signal b used in the present approach is indicated in Fig. 5 by the dotted vertical lines which are indicated at intervals of 100 frames.

The effect that there are more than one candidate offsets (cf. Fig. 4) is more pronounced when only a small number of PCCFs are combined or when each of them has been computed from very few samples.

In order to find the candidate offsets in the combination of a randomly selected PCCFs, noise effects may be mitigated in a first step. For that purpose one may apply morphological closure or one may repeatedly compute the convex hull of the resulting cross-correlation function in order to preserve only its meaningful peaks. For the corresponding offset candidates, it is then checked how many of the single PCCFs support each one of them. This may be regarded as a "consensus check" in the sense that it is checked whether the candidate offset is in consensus with the individual offsets of the individual PCCFs. Several aspects can be taken into account to do this consensus check:

- the absolute or relative PCCF value at the examined offset,
- the curvature of the PCCF at the examined offset,
- the distance in samples from the examined offset to the closest significant local maximum of the PCCF,

or any combination of these and possibly other criteria.

The absolute (or relative) PCCF value of an individual PCCF at the candidate offset may be compared with the combined candidate value. If the difference is larger than a (predefined) threshold, then the individual PCCF may be regarded as not being in consensus with the combined PCCF (=the candidate value). The PCCF may therefore be regarded then as "outlier".

The curvature of the PCCF at the examined offset may also be considered. E.g. if the curvature is significantly different from zero, e.g. beyond a certain threshold, then this may be regarded as an indication that the individual PCCF is an "outlier", since at the candidate offset value the individual PCCF should have a curvature which indicates a maximum (i.e. a curvature of zero).

Another approach could be to consider the distance in samples from the examined candidate offset of the combined PCCF to the closes significant local maximum of a candidate PCCF. If this distance exceeds a certain (e.g. predetermined) value, then the PCCF may be regarded as an "outlier", i.e. as not being in consensus with the candidate offset.

The description of the following embodiment will illustrate the different steps with a more concrete example.

The example application discussed in the following deals with the problem of video synchronization based on one-dimensional time-series extracted frame wise from two videos. This may e.g. just be the bitrate as a function of time (as e.g. described in European Patent Application no. 09175917.5 titled "Method and apparatus to synchronize video data" or in G. Schroth et al. Video synchronization using bit rate profiles. Proceedings of 2010 IEEE 17th Conference on Image Processing, 26.09.2010) or any other one-dimensional time dependent function. In such a case cross-correlation can be used to find the temporal offset between the two different time-series representing the two videos, and thus between the two videos

In order to find the temporal offset between two video sequences, one approach is to reduce the video data to one-dimensional time series that reflect characteristic scene changes over time. For that purpose one may use, as mentioned, the method described in European Patent application no. 09175917.5 titled "Method and apparatus to synchronize video data" or in G. Schroth et al. Video synchronization using bit rate profiles. Proceedings of 2010 IEEE 17th Conference on Image Processing, 26.09.2010 to generate such time series. The used videos are captured with static cameras and show the same scene of a person acting in front of a static background. One may treat the derived 1-D signals as quasi-stationary and normalize them with their global means and standard deviations. This has beneficial effects similar to using normalized cross-correlation as defined in Equation (3).

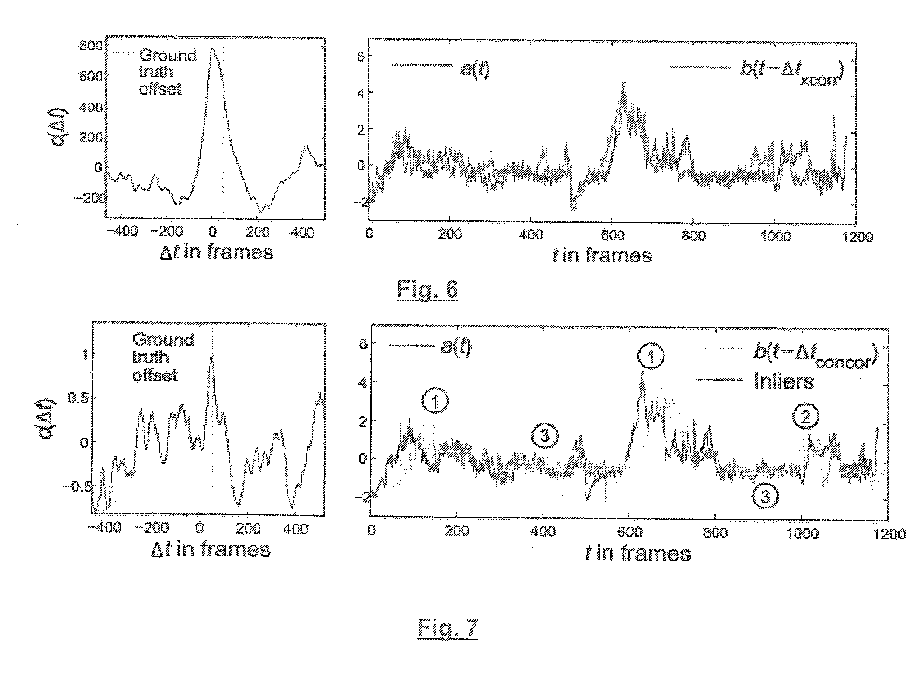

Fig. 5 shows on the left-hand side the two so obtained input signals together with two synchronous example frames from the respective videos on the right-hand side. Their regular cross-correlation function is plotted in Fig. 6 on the left-hand side which leads to an offset of 1 frame. The right-hand side of Fig. 6 shows the signals a and b superimposed at the offset of 1 frame as obtained by the "normal" conventional cross correlation. The deviation from the ground truth offset (=the "real" offset between the two videos) is caused by effects at the image boundaries. Due to the different viewpoints of the involved cameras, people entering and leaving the scene trigger fluctuations, which occur slightly delayed in the 1-D signals. The rather strong peak around frame 700 in both signals a and b is, e.g., caused by such a passer-by effect. Regular, conventional cross-correlation tends to align such dominant signal parts ignoring the smaller yet more consistent parts of the signals. As shown in this Figure 6, the conventional cross-correlation of signals a and b yields the offset $\Delta t_{xcorr}= 1$ frame. This is due to the erroneous peak between frames 600 and 700 whose alignment is enforced.

The proposed cross-correlation approach according to one embodiment deals with this problem by expelling these singular segments, as shown in Fig. 7. The cross-correlation approach according to an embodiment of the invention yields the correct offset $\Delta t_{cor} = 50$ frames. In particular, it discards the segments $b_i$ which are marked by encircled numbers at the right-hand side of Fig. 7 and which are those parts where local maxima are caused by distortions, such as where (1) people walk into the scene from the right, (2) people walk in from the left, and (3) where there is not enough scene motion to reasonably establish temporal relationships between both videos. These portions (1), (2), and (3) are identified as "outliers" in the embodiment of the invention, since the consensus based approach indicates the portion cross-correlation functions which correspond to these distorted parts as not being in consensus with the resulting combined PCCF. Therefore the PCCFs which correspond to these parts are expelled, and the resulting combined PCCF yields the "true" offset of 50 frames. The right-hand part of Fig. 7 shows the signals a and b, with b being shifted by the "true offset" of 50 frames as obtained by the consensus-based cross-correlation function shown on the left-hand side of Fig. 7.

Regarding the actual approach in this embodiment, for this evaluation experiment of the performance of the approach presented herein, the second signal was segmented into snippets with M = 100 frames (step 1 of the above described algorithm). During the random selection step (3a) s=3 of the segments were combined to determine potential offsets. Prior to local maximum extraction (3b), and for the verification step (3C), the respective signals were filtered by closure with a structuring element of width 51 frames. In this implementation, a PCCF votes for a given offset candidate (=is considered to be an "inlier") if its closest local maximum is no further than 10 frames away. But this value is a matter of choice and may be suitably chosen byte skilled person. The question how to decide whether a OCCF is in "consensus" with the combined PCCF can be decided an a manifold of ways.

It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a network entity such as a router, a server, a module acting in the network, or a mobile device such as a mobile phone, a smartphone, a PDA, or anything alike.

## Claims

1. A computer-implemented method to detect a template signal of known shape in a noisy received signal in telecommunication using cross-correlation, said method comprising:

   performing a cross-correlation between a first and a second signal, wherein the first signal is the noisy received signal and said second signal is the template signal **characterized in that** the cross correlation is obtained by performing the following steps:

   - splitting the first signals into shorter segments of length M;
   - performing a cross-correlation for the segments of said first signal with said second signal to obtain a plurality of partial cross correlation functions;
   - obtaining a combined cross-correlation function by combining said partial cross-correlation functions to obtain a combined cross-correlation function;
   - applying an outlier detection or outlier removal approach to identify or remove those segments which are disturbed or corrupted, and wherein said outlier detection approach comprises
   - comparing said individual partial cross-correlation functions with the combined cross correlation function to perform a consensus-check in order to check whether the partial cross correlation function is in consensus with said combined cross-correlation function;
   - re-combining said partial cross-correlation functions without the ones which based on said consensus-check have been identified as disturbed or corrupted to obtain a less disturbed or less corrupted final cross-correlation function.

2. A computer-implemented method to find the temporal offset between two video sequences of the same event, possibly taken from different perspectives, said method comprising:

   transforming the video data of said two scenes into respective one-dimensional time series;
   obtaining the cross-correlation of said two time-series in order to determine based on the obtained cross-correlation the temporal offset between said two video sequences,

**characterized in that** the cross-correlation is obtained by performing the following steps:

- splitting a first signal, wherein the first signal is one of said time series, into shorter segments of length M;
- performing a cross-correlation for the segments of said first signal with a second signal, wherein said second signal is the other one of said time series, to obtain a plurality of partial cross correlation functions;
- obtaining a combined cross-correlation function by combining said partial cross-correlation functions to obtain a combined cross-correlation function;
- applying an outlier detection or outlier removal approach to identify or remove those segments which are disturbed or corrupted, wherein said outlier detection approach comprises:

comparing said individual partial cross-correlation functions with the combined cross correlation function to perform a consensus-check in order to check whether the partial cross correlation function is in consensus with said combined cross-correlation function;

- re-combining said partial cross-correlation functions without the ones which based on said consensus-check have been identified as disturbed or corrupted to obtain a less disturbed or less corrupted final cross-correlation function.

3. The method of claim 1 or 2, wherein the step of comparing comprises:

calculating a combined cross-correlation result as a candidate offset, and wherein
if the consensus-check results in that there is no consensus, treating said partial cross-correlation function as an outlier.

4. The method of claim 1,2 or 3, wherein said step of obtaining a combined cross-correlation function comprises:

selecting a set of said shorter segments of length M;
calculating said combined cross-correlation function based on the partial cross correlation functions of said selected set;
the step of comparing said individual partial cross-correlation functions with the combined cross-correlation function comprises:

performing said consensus-check to identify the outliers among said partial cross-correlation functions of said set;

wherein said method further comprises:

repeating said step of selecting a set of segments, calculating a combined cross-correlation function and performing said consensus check for the individual partial cross-correlations functions which correspond to said segments until there has been found at least one set of segments which has no outliers;

and wherein said recombining said partial cross-correlation functions comprises:

calculating the final combined cross-correlation function based on a set of segments which has no outliers.

5. The method of claim 4, wherein the combined cross-correlation function is calculated based on a plurality of sets of segments which may have different numbers of segments, and wherein said final combined cross-correlation function is calculated based on the set of segments which has the maximum number of segments among the sets of segments for which no outlier has been found.

6. The method of one of the preceding claims, wherein a combined cross-correlation function yields a candidate offset, and said outlier detection or removal approach comprises one of the following:

Comparing the absolute or the relative value of a partial cross-correlation function at the candidate offset with the combined cross-correlation value at the candidate offset;
comparing the curvature of the partial cross-correlation function at the candidate offset with a certain threshold;
comparing the distance in samples from the candidate offset to the closest significant local maximum of the partial cross-correlation function as to whether it is beyond a certain threshold.

7. The method of claim 1 or 2, wherein said outlier detection or removal approach comprises one of the following:

   a RANSAC algorithm;
   a least median of estimated squares algorithm;
   an M-estimator.

8. The method of one of the preceding claims, wherein
   said outlier detection approach is a RANSAC algorithm in which the model which is to be fitted is the peak of the cross-correlation value between the first and second signal, and the data points used in the fitting are the respective peaks of the partial cross correlation functions, the values of which, after removal of the disturbed partial cross-correlation functions, are combined to obtain the total cross correlation function.

9. The method of claim 2, further comprising:

   Treating the obtained one-dimensional signals as quasi stationary and normalize them with their global means and standard deviations.

10. An apparatus for detecting a template signal of known shape in a noisy received signal in telecommunication using cross-correlation,
    said apparatus comprising:

    means for performing a cross-correlation between a first and a second signal, wherein the first signal is the noisy received signal and the second signal is the template signal, said apparatus being **characterized by** comprising:

      - means for splitting the first signal into shorter segments of length M;
      - means for performing a cross-correlation for the segments of said first signal with said second signal to obtain a plurality of partial cross correlation functions;
      - means for obtaining a combined cross-correlation function by combining said partial cross-correlation functions to obtain a combined cross-correlation function;
      - means for applying an outlier detection or outlier removal approach to identify or remove those segments which are disturbed or corrupted, and wherein said outlier detection approach comprises comparing said individual partial cross-correlation functions with the combined cross correlation function to perform a consensus-check in order to check whether the partial cross correlation function is in consensus with said combined cross-correlation function;
      - means for re-combining said partial cross-correlation functions without the ones which based on said consensus-check have been identified as disturbed or corrupted to obtain a less disturbed or less corrupted final cross-correlation function.

11. An apparatus for finding the temporal offset between two video sequences of the same event, possibly taken from different perspectives, said apparatus comprising:

    means for transforming the video data of said two scenes into respective one-dimensional time series;
    means for obtaining the cross-correlation of said two time-series in order to determine based on the obtained cross-correlation the temporal offset between said two video sequences,
    **characterized in that** the apparatus comprises:

      - means for splitting a first signal, wherein the first signal is one of said time series, into shorter segments of length M;
      - performing a cross-correlation for the segments of said first signal with a second signal, wherein said second signal is the other one of said time series, to obtain a plurality of partial cross correlation functions;
      - obtaining a combined cross-correlation function by combining said partial cross-correlation functions to obtain a combined cross-correlation function;
      - applying an outlier detection or outlier removal approach to identify or remove those segments which are disturbed or corrupted, wherein said outlier detection approach comprises comparing said individual partial cross-correlation functions with the combined cross correlation function to perform a consensus-check in order to check whether the partial cross correlation function is in consensus with said combined cross-correlation function;

- re-combining said partial cross-correlation functions without the ones which based on said consensus-check have been identified as disturbed or corrupted to obtain a less disturbed or less corrupted final cross-correlation function.

**12.** The apparatus of claim 10 or 11 wherein the means for comparing comprises
means for calculating a combined cross-correlation result as a candidate offset, and wherein-:

if the consensus- check results in that there is no consensus, treating said partial cross-correlation function as an outlier.

**13.** The apparatus of claim 10, 11 or 12, wherein said means for obtaining a combined cross-correlation function comprises:

means for selecting a set of shorter segments of length M;
means for calculating said combined cross-correlation based on the partial cross correlation functions of said selected set; wherein said means for comparing said individual partial cross-correlation functions with the combined cross-correlation function comprises:

means for performing said consensus-check to identify the outliers among said partial cross-correlation functions of said set;
wherein said apparatus further comprises
means for repeating said step of selecting a set of segments, calculating a combined cross-correlation function and performing said consensus check for the
individual partial cross-correlation functions which correspond to said segments until there has been found at least one set of segments;
and wherein said means recombining said partial cross-correlation functions comprises:

means for calculating the final combined cross-correlation function based on a set of segments which has no outliers.

**14.** A computer program comprising:

Computer program code which when being executed on a computer enables said computer to carry out a method according to one of claims 1 to 9.

**Patentansprüche**

**1.** Ein computerimplementiertes Verfahren zum Detektieren eines Mustersignals bekannter Form in einem verrauschten empfangenen Signal in der Telekommunikation unter Verwendung von Kreuzkorrelation, wobei das Verfahren aufweist:

Durchführen einer Kreuzkorrelation zwischen einem ersten und einem zweiten Signal, wobei das erste Signal ein verrauschtes empfangenes Signal ist und das zweite Signal das Mustersignal, **dadurch gekennzeichnet, dass** die Kreuzkorrelation erhalten wird durch Durchführen der folgenden Schritte:

Aufspalten des ersten Signals in kürzere Segmente der Länge M;
Durchführen einer Kreuzkorrelation für die Segmente des ersten Signals mit dem zweiten Signal, um eine Mehrzahl von partiellen Kreuzkorrelationsfunktionen zu erhalten;
Erhalten einer kombinierten Kreuzkorrelationsfunktion durch Kombinieren der partiellen Kreuzkorrelationsfunktionen, um eine kombinierte Kreuzkorrelationsfunktion zu erhalten;
Anwenden eines Ausreißerdetektions- oder Ausreißerentfernungsansatzes, um diejenigen Segmente zu identifizieren oder zu entfernen, die gestört oder beschädigt sind, und wobei der Ausreißerdetektionsansatz aufweist:

Vergleichen der individuellen partiellen Kreuzkorrelationsfunktionen mit der kombinierten Kreuzkorrelationsfunktion, um eine Konsensüberprüfung durchzuführen, um zu überprüfen, ob die partielle Kreuzkorrelationsfunktion in Konsens mit der kombinierten Kreuzkorrelationsfunktion ist;

Rekombinieren der partiellen Kreuzkorrelationsfunktionen ohne diejenigen, die basierend auf der Konsensüberprüfung als gestört oder beschädigt identifiziert wurden, um eine weniger gestörte oder beschädigte Kreuzkorrelationsfunktion zu erhalten.

2. Ein computerimplementiertes Verfahren, um den temporalen Offset zwischen zwei Videosequenzen desselben Ereignisses zu erhalten, möglicherweise aufgenommen von unterschiedlichen Perspektiven, wobei das Verfahren aufweist:

Transformieren der Videodaten der zwei Szenen in jeweilige eindimensionale Zeitserien;
Erhalten der Kreuzkorrelation der zwei Zeitserien, um basierend auf der erhaltenen Kreuzkorrelation den temporalen Offset zwischen zwei Videosequenzen zu ermitteln, **dadurch gekennzeichnet, dass** die Kreuzkorrelation erhalten wird durch Durchführen der folgenden Schritte:

Aufspalten eines ersten Signals, wobei das erste Signal eines der Zeitserien ist, in kürzere Segmente der Länge M;
Durchführen einer Kreuzkorrelation für die Segmente des ersten Signals mit einem zweiten Signal, wobei das zweite Signal das andere der Zeitserien ist, um eine Mehrzahl von partiellen Kreuzkorrelationsfunktionen zu erhalten;
Erhalten einer kombinierten Kreuzkorrelationsfunktion durch Kombinieren der partiellen Kreuzkorrelationsfunktionen, um eine kombinierte Kreuzkorrelationsfunktion zu erhalten;
Anwenden eines Ausreißerdetektions- oder Ausreißerentfernungsansatzes, um diejenigen Segmente, die gestört oder beschädigt sind, zu identifizieren oder zu entfernen, wobei der Ausreißerdetektionsansatz aufweist:

Vergleichen der individuellen partiellen Kreuzkorrelationsfunktionen mit der kombinierten Kreuzkorrelationsfunktion, um eine Konsensüberprüfung durchzuführen, um zu überprüfen, ob die partielle Kreuzkorrelationsfunktion in Konsens mit der kombinierten Kreuzkorrelationsfunktion ist;
Rekombinieren der partiellen Kreuzkorrelationsfunktionen ohne diejenigen, die basierend auf der Konsensüberprüfung als gestört oder beschädigt identifiziert wurden, um eine weniger gestörte oder weniger beschädigte finale Kreuzkorrelationsfunktion zu erhalten.

3. Das Verfahren nach Anspruch 1 oder 2, wobei der Schritt des Vergleichens aufweist:

Berechnen eines kombinierten Kreuzkorrelationsergebnisses als Kandidatenoffset, und wobei
wenn die Konsensüberprüfung darin resultiert, dass kein Konsens vorliegt, Behandeln der partiellen Kreuzkorrelationsfunktion als Ausreißer.

4. Das Verfahren nach Anspruch 1, 2 oder 3, wobei der Schritt des Erhaltens einer kombinierten Kreuzkorrelationsfunktion aufweist:

Auswählen eines Satzes der kürzeren Segmente der Länge M;
Berechnen der kombinierten Kreuzkorrelationsfunktion basierend auf den partiellen Kreuzkorrelationsfunktionen des ausgewählten Satzes;
wobei der Schritt des Vergleichens der individuellen partiellen Kreuzkorrelationsfunktionen mit der kombinierten Kreuzkorrelationsfunktion aufweist:

Durchführen der Konsensüberprüfung, um die Ausreißer unter den partiellen Kreuzkorrelationsfunktionen des Satzes zu identifizieren;
wobei das Verfahren ferner aufweist:

Wiederholen des Schrittes des Auswählens eines Satzes von Segmenten, Berechnen einer kombinierten Kreuzkorrelationsfunktion und Durchführen der Konsensüberprüfung für die individuellen partiellen Kreuzkorrelationsfunktionen, die den Segmenten entsprechen, bis zumindest ein Satz von Segmenten gefunden wurde, der keine Ausreißer aufweist;
und wobei das Rekombinieren der partiellen Kreuzkorrelationsfunktionen aufweist:

Berechnen der finalen kombinierten Kreuzkorrelationsfunktion basierend auf einem Satz von Segmenten, der keine Ausreißer aufweist.

**5.** Das Verfahren nach Anspruch 4, wobei die kombinierte Kreuzkorrelationsfunktion berechnet wird basierend auf einer Mehrzahl von Sätzen von Segmenten, die eine unterschiedliche Anzahl von Segmenten haben können, und wobei die finale kombinierte Kreuzkorrelationsfunktion berechnet wird basierend auf dem Satz von Segmenten, der die maximale Anzahl von Segmenten unter denjenigen Segmenten hat, für die keine Ausreißer gefunden wurden.

**6.** Das Verfahren nach einem der vorhergehenden Ansprüche, wobei eine kombinierte Kreuzkorrelationsfunktion einen Kandidatenoffset liefert und der Ausreißerdetektions- oder Entfernungsansatz eines der Folgenden aufweist:

Vergleichen der absoluten oder relativen Werte einer partiellen Kreuzkorrelationsfunktion und des Kandidatenoffset mit dem kombinierten Kreuzkorrelationswert an dem Kandidatenoffset;
Vergleichen der Krümmung der partiellen Kreuzkorrelationsfunktion an dem Kandidatenoffset mit einem bestimmten Schwellwert;
Vergleichen des Abstandes in Samples von dem Kandidatenoffset zu dem nächsten signifikanten lokalen Maximum der partiellen Kreuzkorrelationsfunktion dahingehend, ob sie jenseits eines bestimmten Schwellwerts liegt.

**7.** Das Verfahren nach Anspruch 1 oder 2, wobei der Ausreißerdetektions- oder Entfernungsansatz eines der Folgenden aufweist:

Einen RANSAC-Algorithmus;
einen geringsten Median von geschätzten Quadraten-Algorithmus;
einen M-Schätzer.

**8.** Das Verfahren nach einem der vorhergehenden Ansprüche, wobei
der Ausreißerdetektionsansatz ein RANSAC-Algorithmus ist, bei dem das Modell, das gefittet wird, der Peak des Kreuzkorrelationswerts zwischen dem ersten und zweiten Signal ist und die Datenpunkte, die beim Fitting verwendet werden, die jeweiligen Peaks der partiellen Kreuzkorrelationsfunktionen sind, deren Werte nach der Entfernung der gestörten partiellen Kreuzkorrelationsfunktionen kombiniert werden, um die totale Kreuzkorrelationsfunktion zu erhalten.

**9.** Das Verfahren nach Anspruch 2, ferner aufweisend:

Behandeln der erhaltenen eindimensionalen Signale als quasi stationär und Normalisieren von ihnen mit ihren globalen Mittelwerten und Standardabweichungen.

**10.** Eine Vorrichtung zum Detektieren eines Mustersignals bekannter Form in einem verrauschten empfangenen Signal in der Telekommunikation unter Verwendung von Kreuzkorrelation, wobei die Vorrichtung aufweist:

Mittel zum Durchführen einer Kreuzkorrelation zwischen einem ersten und einem zweiten Signal, wobei das erste Signal ein verrauschtes empfangenes Signal ist und das zweite Signal das Mustersignal, **dadurch gekennzeichnet, dass** die Vo4rrichtung aufweist:

Mittel zum Aufspalten des ersten Signals in kürzere Segmente der Länge M;
Mittel zum Durchführen einer Kreuzkorrelation für die Segmente des ersten Signals mit dem zweiten Signal, um eine Mehrzahl von partiellen Kreuzkorrelationsfunktionen zu erhalten;
Mittel zum Erhalten einer kombinierten Kreuzkorrelationsfunktion durch Kombinieren der partiellen Kreuzkorrelationsfunktionen, um eine kombinierte Kreuzkorrelationsfunktion zu erhalten;
Mittel zum Anwenden eines Ausreißerdetektions- oder Ausreißerentfernungsansatzes, um diejenigen Segmente zu identifizieren oder zu entfernen, die gestört oder beschädigt sind, und wobei der Ausreißerdetektionsansatz aufweist:

Mittel zum Vergleichen der individuellen partiellen Kreuzkorrelationsfunktionen mit der kombinierten Kreuzkorrelationsfunktion, um eine Konsensüberprüfung durchzuführen, um zu überprüfen, ob die partielle Kreuzkorrelationsfunktion in Konsens mit der kombinierten Kreuzkorrelationsfunktion ist;
Mittel zum Rekombinieren der partiellen Kreuzkorrelationsfunktionen ohne diejenigen, die basierend auf der Konsensüberprüfung identifiziert wurden als gestört oder beschädigt, um eine weniger gestörte oder beschädigte Kreuzkorrelationsfunktion zu erhalten.

**11.** Eine Vorrichtung zum Auffinden des temporalen Offsets zwischen zwei Videosequenzen desselben Ereignisses, möglicherweise aufgenommen von unterschiedlichen Perspektiven, wobei die Vorrichtung aufweist:

Mittel zum Transformieren der Videodaten der zwei Szenen in jeweilige eindimensionale Zeitserien;
Mittel zum Erhalten der Kreuzkorrelation der zwei Zeitserien, um basierend auf der erhaltenen Kreuzkorrelation den temporalen Offset zwischen zwei Videosequenzen zu ermitteln, **dadurch gekennzeichnet, dass** die Vorrichtung aufweist:

Mittel zum Aufspalten eines ersten Signals, wobei das erste Signal eines der Zeitserien ist, in kürzere Segmente der Länge M;
Mittel zum Durchführen einer Kreuzkorrelation für die Segmente des ersten Signals mit einem zweiten Signal, wobei das zweite Signal das andere der Zeitserien ist, um eine Mehrzahl von partiellen Kreuzkorrelationsfunktionen zu erhalten;
Mittel zum Erhalten einer kombinierten Kreuzkorrelationsfunktion durch Kombinieren der partiellen Kreuzkorrelationsfunktionen, um eine kombinierte Kreuzkorrelationsfunktion zu erhalten;
Mittel zum Anwenden eines Ausreißerdetektions- oder Ausreißerentfernungsansatzes, um diejenigen Segmente, die gestört oder beschädigt sind, zu identifizieren oder zu entfernen, wobei der Ausreißerdetektionsansatz aufweist:

Mittel zum Vergleichen der individuellen partiellen Kreuzkorrelationsfunktionen mit der kombinierten Kreuzkorrelationsfunktion, um eine Konsensüberprüfung durchzuführen, um zu überprüfen, ob die partielle Kreuzkorrelationsfunktion in Konsens mit der kombinierten Kreuzkorrelationsfunktion ist;
Mittel zum Rekombinieren der partiellen Kreuzkorrelationsfunktionen ohne diejenigen, die basierend auf der Konsensüberprüfung als gestört oder beschädigt identifiziert wurden, um eine weniger gestörte oder weniger beschädigte finale Kreuzkorrelationsfunktion zu erhalten.

**12.** Die Vorrichtung nach Anspruch 10 oder 11, wobei die Mittel zum Vergleichen aufweisen:

Mittel zum Berechnen eines kombinierten Kreuzkorrelationsergebnisses als Kandidatenoffset, und wobei wenn die Konsensüberprüfung darin resultiert, dass kein Konsens vorliegt, Behandeln der partiellen Kreuzkorrelationsfunktion als Ausreißer.

**13.** Die Vorrichtung nach Anspruch 10, 11 oder 12, wobei die Mittel zum Erhalten einer kombinierten Kreuzkorrelationsfunktion aufweisen:

Mittel zum Auswählen eines Satzes der kürzeren Segmente der Länge M;
Mittel zum Berechnen der kombinierten Kreuzkorrelationsfunktion basierend auf den partiellen Kreuzkorrelationsfunktionen des ausgewählten Satzes;
wobei die Mittel zum Vergleichen der individuellen partiellen Kreuzkorrelationsfunktionen mit der kombinierten Kreuzkorrelationsfunktion aufweist:

Durchführen der Konsensüberprüfung, um die Ausreißer unter den partiellen Kreuzkorrelationsfunktionen des Satzes zu identifizieren;
wobei die Vorrichtung ferner aufweist:
Mittel zum Wiederholen des Schrittes des Auswählens eines Satzes von Segmenten, Berechnen einer kombinierten Kreuzkorrelationsfunktion und Durchführen der Konsensüberprüfung für die individuellen partiellen Kreuzkorrelationsfunktionen, die den Segmenten entsprechen, bis zumindest ein Satz von Segmenten gefunden wurde, der keine Ausreißer aufweist;
und wobei das Mittel zum Rekombinieren der partiellen Kreuzkorrelationsfunktionen aufweisen:

Mittel zum Berechnen der finalen kombinierten Kreuzkorrelationsfunktion basierend auf einem Satz von Segmenten, der keine Ausreißer aufweist.

**14.** Ein Computerprogramm aufweisend:

Computerprogrammcode, der, wenn er ausgeführt wird auf einem Computer, den Computer in die Lage versetzt, ein Verfahren gemäß einem der Ansprüche 1 bis 9 auszuführen.

**Revendications**

1. Procédé implémenté par ordinateur pour détecter un signal modèle de forme connue dans un signal bruité reçu en télécommunication en utilisant une corrélation croisée, ledit procédé comprenant :

   la réalisation d'une corrélation croisée entre un premier et un second signal, où le premier signal est le signal bruité reçu et ledit second signal est le signal modèle, **caractérisé en ce que** la corrélation croisée est obtenue en réalisant les étapes suivantes :

   - division du premier signal en segments plus courts de longueur M ;
   - réalisation d'une corrélation croisée pour les segments dudit premier signal avec ledit second signal pour obtenir une pluralité de fonctions de corrélation croisée partielles ;
   - obtention d'une fonction de corrélation croisée combinée en combinant lesdites fonctions de corrélation croisée partielles pour obtenir une fonction de corrélation croisée combinée ;
   - application d'une approche de détection de valeur aberrante ou d'élimination de valeur aberrante pour identifier ou éliminer ces segments qui sont perturbés ou corrompus, et où ladite approche de détection de valeur aberrante comprend :
   - la comparaison desdites fonctions de corrélation croisée partielles individuelles avec la fonction de corrélation croisée combinée pour réaliser une vérification de consensus afin de vérifier si la fonction de corrélation croisée partielle est consensuelle avec ladite fonction de corrélation croisée combinée ;
   - recombinaison desdites fonctions de corrélation croisée partielles avec celles qui, d'après ladite vérification de consensus, ont été identifiées comme perturbées ou corrompues pour obtenir une fonction de corrélation croisée finale moins perturbée ou moins corrompue.

2. Procédé implémenté par ordinateur permettant de trouver le décalage temporel entre deux séquences vidéo du même événement, éventuellement tirées de différentes perspectives, ledit procédé comprenant :

   la transformation des données vidéo desdites deux scènes en séries temporelles unidimensionnelles respectives ;
   l'obtention de la corrélation croisée desdites deux séries temporelles afin de déterminer, d'après la corrélation croisée obtenue, le décalage temporel entre lesdites deux séquences vidéo,
   **caractérisé en ce que** la corrélation croisée est obtenue en réalisant les étapes suivantes :

   - division d'un premier signal, où le premier signal est l'une desdites séries temporelles, en segments plus courts de longueur M ;
   - réalisation d'une corrélation croisée pour les segments dudit premier signal avec un second signal, où ledit second signal est l'autre desdites séries temporelles, pour obtenir une pluralité de fonctions de corrélation croisée partielles ;
   - obtention d'une fonction de corrélation croisée combinée en combinant lesdites fonctions de corrélation croisée partielles pour obtenir une fonction de corrélation croisée combinée ;
   - application d'une approche de détection de valeur aberrante ou d'élimination de valeur aberrante pour identifier ou éliminer ces segments qui sont perturbés ou corrompus, où ladite approche de détection de valeur aberrante comprend :
   - la comparaison desdites fonctions de corrélation croisée partielles individuelles avec la fonction de corrélation croisée combinée pour réaliser une vérification de consensus afin de vérifier si la fonction de corrélation croisée partielle est consensuelle avec ladite fonction de corrélation croisée combinée ;
   - recombinaison desdites fonctions de corrélation croisée partielles sans celles qui, d'après ladite vérification de consensus, ont été identifiées comme perturbées ou corrompues pour obtenir une fonction de corrélation croisée finale moins perturbée ou moins corrompue.

3. Procédé selon la revendication 1 ou 2, dans lequel l'étape de comparaison comprend :

   le calcul d'un résultat de corrélation croisée combinée en tant que décalage candidat, et où
   si la vérification de consensus aboutit au fait qu'il n'y a pas de consensus, le traitement de ladite fonction de corrélation croisée partielle comme une valeur aberrante.

4. Procédé selon la revendication 1, 2 ou 3, dans lequel ladite étape d'obtention d'une fonction de corrélation croisée combinée comprend :

la sélection d'un jeu desdits segments plus courts de longueur M ;
le calcul de ladite fonction de corrélation croisée combinée d'après les fonctions de corrélation croisée partielles dudit jeu sélectionné ;
l'étape de comparaison desdites fonctions de corrélation croisées partielles individuelles avec la fonction de corrélation croisée combinée comprend :

la réalisation de ladite vérification de consensus pour identifier les valeurs aberrantes parmi lesdites fonctions de corrélation croisée partielles dudit jeu ;
dans lequel ledit procédé comprend en outre :

la répétition de ladite étape de sélection d'un jeu de segments, le calcul d'une fonction de corrélation croisée combinée et la réalisation de ladite vérification de consensus pour les fonctions de corrélation croisée partielles individuelles qui correspondent auxdits segments jusqu'à ce que l'on trouve au moins un jeu de segments qui n'ait pas da valeurs aberrantes ;
et dans lequel ladite recombinaison desdites fonctions de corrélation croisées partielles comprend :

le calcul de la fonction de corrélation croisée combinée finale d'après un jeu de segments qui n'a pas da valeurs aberrantes.

5. Procédé selon la revendication 4, dans lequel la fonction de corrélation croisée combinée est calculée d'après une pluralité de jeux de segments qui peuvent avoir des nombres différents de segments, et où ladite fonction de corrélation croisée combinée finale est calculée d'après le jeu de segments qui a le nombre maximal de segments parmi les jeux de segments pour lesquels aucune valeur aberrante n'a été trouvée.

6. Procédé selon l'une des revendications précédentes, dans lequel une fonction de corrélation croisée combinée produit un décalage candidat, et ladite approche de détection de valeur aberrante ou d'élimination de valeur aberrante comprend l'un des éléments suivants :

la comparaison de la valeur absolue ou de la valeur relative d'une fonction de corrélation croisée partielle au niveau du décalage candidat avec la valeur de corrélation croisée combinée au niveau du décalage candidat ;
la comparaison de la courbure de la fonction de corrélation croisée partielle au niveau du décalage candidat avec un certain seuil ;
la comparaison de la distance dans des échantillons provenant du décalage candidat au maximum local significatif le plus proche de la fonction de corrélation croisée partielle quant à savoir si elle se situe au-delà d'un certain seuil.

7. Procédé selon la revendication 1 ou 2, dans lequel ladite approche de détection ou d'élimination de valeur aberrante comprend l'un des éléments suivants :

un algorithme RANSAC ;
un algorithme de la moindre médiane des carrés estimés ;
un M estimateur.

8. Procédé selon l'une des revendications précédentes, dans lequel
ladite approche de détection de valeur aberrante est un algorithme RANSAC dans lequel le modèle qui doit être ajusté est le pic de la valeur de corrélation croisée entre le premier et le second signal, et les points de données utilisés dans l'ajustement sont les pics respectifs des fonctions de corrélation croisée partielles, dont les valeurs, après élimination des fonctions de corrélation croisée partielles perturbées, sont combinées pour obtenir la fonction de corrélation croisée totale.

9. Procédé selon la revendication 8, comprenant en outre :

le traitement des signaux unidimensionnels obtenus en tant que quasi stationnaires et leur normalisation avec leurs moyennes et écarts-types globaux.

10. Appareil de détection d'un signal modèle de forme connue dans un signal bruité reçu en télécommunication en utilisant une corrélation croisée, ledit appareil comprenant :

un moyen permettant de réaliser une corrélation croisée entre un premier et un second signal, où le premier signal est le signal bruité reçu et ledit second signal est le signal modèle, ledit appareil étant **caractérisé en ce qu'**il comprend :

- un moyen permettant de diviser le premier signal en segments plus courts de longueur M ;
- un moyen permettant de réaliser une corrélation croisée pour les segments dudit premier signal avec ledit second signal pour obtenir une pluralité de fonctions de corrélation croisée partielles ;
- un moyen permettant d'obtenir une fonction de corrélation croisée combinée en combinant lesdites fonctions de corrélation croisée partielles pour obtenir une fonction de corrélation croisée combinée ;
- un moyen permettant d'appliquer une approche de détection de valeur aberrante ou d'élimination de valeur aberrante pour identifier ou éliminer ces segments qui sont perturbés ou corrompus, et où ladite approche de détection de valeur aberrante comprend la comparaison desdites fonctions de corrélation croisée partielles individuelles avec la fonction de corrélation croisée combinée pour réaliser une vérification de consensus afin de vérifier si la fonction de corrélation croisée partielle est consensuelle avec ladite fonction de corrélation croisée combinée ;
- un moyen permettant de recombiner lesdites fonctions de corrélation croisée partielles sans celles qui, d'après ladite vérification de consensus, ont été identifiées comme perturbées ou corrompues pour obtenir une fonction de corrélation croisée finale moins perturbée ou moins corrompue.

11. Appareil permettant de trouver le décalage temporel entre deux séquences vidéo du même événement, éventuellement tirées de différentes perspectives, ledit appareil comprenant :

un moyen permettant de transformer des données vidéo desdites deux scènes en séries temporelles unidimensionnelles respectives ;
un moyen permettant d'obtenir la corrélation croisée desdites deux séries temporelles afin de déterminer, d'après la corrélation croisée obtenue, le décalage temporel entre lesdites deux séquences vidéo, **caractérisé en ce que** l'appareil comprend :

- un moyen permettant de diviser un premier signal, où le premier signal est l'une desdites séries temporelles, en segments plus courts de longueur M ;
- la réalisation d'une corrélation croisée pour les segments dudit premier signal avec un second signal, où ledit second signal est l'autre desdites séries temporelles, pour obtenir une pluralité de fonctions de corrélation croisée partielles ;
- l'obtention d'une fonction de corrélation croisée combinée en combinant lesdites fonctions de corrélation croisée partielles pour obtenir une fonction de corrélation croisée combinée ;
- l'application d'une approche de détection de valeur aberrante ou d'élimination de valeur aberrante pour identifier ou éliminer ces segments qui sont perturbés ou corrompus, où ladite approche de détection de valeur aberrante comprend la comparaison desdites fonctions de corrélation croisée partielles individuelles avec la fonction de corrélation croisée combinée pour réaliser une vérification de consensus afin de vérifier si la fonction de corrélation croisée partielle est consensuelle avec ladite fonction de corrélation croisée combinée ;
- la recombinaison desdites fonctions de corrélation croisée partielles sans celles qui, d'après ladite vérification de consensus, ont été identifiées comme perturbées ou corrompues pour obtenir une fonction de corrélation croisée finale moins perturbée ou moins corrompue.

12. Appareil selon la revendication 10 ou 11, dans lequel le moyen de comparaison comprend :

un moyen permettant de calculer un résultat de corrélation croisée combinée en tant que décalage candidat, et dans lequel
si la vérification de consensus aboutit au fait qu'il n'y a pas de consensus, le traitement de ladite fonction de corrélation croisée partielle comme une valeur aberrante.

13. Appareil selon la revendication 10, 11 ou 12, dans lequel ledit moyen permettant d'obtenir une fonction de corrélation croisée combinée comprend :

un moyen permettant de sélectionner un jeu de segments plus courts de longueur M ;
un moyen permettant de calculer ladite corrélation croisée combinée d'après les fonctions de corrélation croisée partielles dudit jeu sélectionné ; dans lequel ledit moyen permettant de comparer lesdites fonctions de corrélation

EP 2 458 510 B1

croisées partielles individuelles avec la fonction de corrélation croisée combinée comprend :

un moyen permettant de réaliser ladite vérification de consensus pour identifier les valeurs aberrantes parmi lesdites fonctions de corrélation croisée partielles dudit jeu ;
dans lequel ledit appareil comprend en outre :

un moyen permettant de répéter ladite étape de sélection d'un jeu de segments, le calcul d'une fonction de corrélation croisée combinée et la réalisation de ladite vérification de consensus pour les fonctions de corrélation croisée partielles individuelles qui correspondent auxdits segments jusqu'à ce que l'on trouve au moins un jeu de segments ;
et dans lequel ledit moyen recombinant lesdites fonctions de corrélation croisées partielles comprend :

un moyen permettant de calculer la fonction de corrélation croisée combinée finale d'après un jeu de segments qui n'a pas de valeurs aberrantes.

14. Programme informatique comprenant :

un code de programme informatique qui, lorsqu'il est exécuté sur un ordinateur, permet audit ordinateur de réaliser un procédé selon l'une quelconque des revendications 1 à 9.

Fig. 1

Fig. 2

EP 2 458 510 B1

Fig. 3

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100027602 A1

- EP 09175917 A

### Non-patent literature cited in the description

- **G. TURIN.** An introduction to matched filters. *Information Theory, IRE Transactions,* 1960, vol. 6 (3), 311-329
- **ZHONG-DAN LAN et al.** *Robust matching by partial correlation,* 01 August 1995, 1-21
- **PEIHUA LI et al.** Robust Acoustic Source Localization with TDOA Based RANSAC Algorithm. *MERGING INTELLIGENT COMPUTING TECHNOLOGY AND APPLICATIONS, SPRINGER BERLIN HEIDELBERG, BERLIN, HEIDELBERG,* 16 September 2009, ISBN 978-3-642-04069-6, 222-227
- Motion estimation using adaptive correlation and local directional smoothing. **CALWAY A et al.** IMAGE PROCESSING, 1998. ICIP 98. PROCEEDINGS. 1998 INTERNATIONAL CONFERENCE ON CHICAGO, IL, USA. IEEE COMPUT. SOC, 04 October 1998, vol. 3, 614-618

- *Correlation,* 05 June 1997
- **M.A. FISCHLER ; R.C. BOLLES.** Random sample consensus: A paradigm for model fitting with applications to image analysis and automated cartography. *Communications of the ACM,* 1981, vol. 24 (6), 381-395
- **G. SCHROTH et al.** Video synchronization using bit rate profiles. *Proceedings of 2010 IEEE 17th International Conference on Image Processing,* 26 September 2010
- **G. SCHROTH et al.** Video synchronization using bit rate profiles. *Proceedings of 2010 IEEE 17th Conference on Image Processing,* 26 September 2010